# EUROPÄISCHE PATENTSCHRIFT

(11) **EP 1 674 255 B1**
(45) Veröffentlichungstag und Bekanntmachung des Hinweises auf die Patenterteilung: **03.10.2007**
(21) Anmeldenummer: 05027885.2
(22) Anmeldetag: 20.12.2005
(51) Int. Cl.: B32B 27/12, D06M 15/256, D06N 3/04

(54) **Textile Verbunde aus Fluorpolymeren**
Composite fabric made of fluoropolymers
Article textile composite à base de fluoropolymères

(30) Priorität: 22.12.2004 DE 202004020048 U
(43) Veröffentlichungstag der Anmeldung: 28.06.2006
(73) Patentinhaber: Fitz, Johannes, 83370 Seeon (DE)
(72) Erfinder: Fitz, Johannes, 83370 Seeon (DE)
(74) Vertreter: Manitz, Finsterwald & Partner GbR

(56) Entgegenhaltungen:
- EP-A- 0 391 660
- EP-A- 0 829 514
- DE-A1- 2 813 622
- US-A- 5 217 797
- US-A1- 2003 104 741
- US-B1- 6 261 678

## Beschreibung

Die vorliegende Erfindung betrifft einen Verbund aus Fluorpolymeren umfassend wenigstens ein textiles Gebilde und wenigstens eine darauf aufgebrachte Schicht.

Fluorpolymere sind Hochleistungswerkstoffe, welche sich durch eine extreme Witterungsbeständigkeit, Schmutz und Wasser abstoßende Eigenschaften, schwere Entflammbarkeit sowie Beständigkeit innerhalb eines breiten Temperaturbereichs auszeichnen und daher insbesondere auch für extreme Anwendungen eingesetzt werden können.

Unter der Vielzahl der heute verfügbaren Fluorpolymere nimmt Polytetrafluorethylen (PTFE), bei dem es sich um einen Sinterwerkstoff mit einem Schmelzpunkt von 327°C handelt, unverändert eine führende Stellung ein. Aufgrund seiner anwendungstechnischen Eigenschaften wird PTFE seit vielen Jahren in Form von Fasern, Filamenten und Bändchen angeboten und werden daraus hergestellte textile Gebilde, wie Gewebe, für unterschiedliche Einsatzgebiete, beispielsweise beim chemischen Apparatebau, Fahrzeugbau und für Umweltanwendungen, eingesetzt.

Um die anwendungstechnischen Eigenschaften von auf PTFE basierenden textilen Geweben zu verbessern, wurden bereits aus PTFE-Gewebe und Folien bestehende Laminate bzw. Verbunde vorgeschlagen. Diese weisen jedoch im Allgemeinen hohe Flächengewichte auf und besitzen eine unerwünschte Steifigkeit. Ferner können die Bestandteile der bekannten Verbunde, nämlich das PTFE-Gewebe und das Folienmaterial, nur mittels Verschweißen bei Temperaturen im Bereich von 340 bis 380°C miteinander verbunden werden, was ebenfalls ungünstig ist. Aus den vorgenannten Gründen werden die bekannten Verbunde allgemein als nachteilig empfunden.

In der DE 197 54 597 A1 wird ein textiler Membranwerkstoff mit hoher Lichtdurchlässigkeit offenbart, der aus endlosen Monofilamenten hergestellt aus einem Fluorpolymer oder einem Fluorthermoplast besteht und bei Durchstrahlung mit Licht im sichtbaren Bereich eine Gesamtlichtdurchlässigkeit von mehr als 50% aufweist. Dieser Membranwerkstoff kann auch mit einem Fluorpolymer zu einem Verbund beschichtet werden. Allerdings ist die Haftung der einzelnen Schichten eines solchen Verbundes untereinander verbesserungsbedürftig.

Aus dem US Patent 5,217,797 ist ein Verbunddiaphragma bekannt, welches, in dieser Reihenfolge, i) eine kontinuierliche Schicht eines festen Polytetrafluorethylens (PTFE) sowie ii) eine Schicht aus einem Verbundwerkstoff enthaltend wenigstens eine Lage gefertigt aus Polytetrafluorethylenfasem kombiniert mit einem flexiblen Polymer enthält, wobei das flexible Polymer aus der aus duroplastischen Elastomeren, thermoplastischen Elastomeren und thermoplastischen Polymeren bestehenden Gruppe ausgewählt ist.

Aufgabe der vorliegenden Erfindung war es daher, einen Verbund aus Fluorpolymeren umfassend wenigstens ein textiles Gebilde und wenigstens eine darauf aufgebrachte Schicht bereit zu stellen, bei dem die einzelnen Schichten untereinander eine hohe Haftung aufweisen.

Erfindungsgemäß wird diese Aufgabe gelöst durch einen Verbund gemäß Patentanspruch 1 und insbesondere durch einen Verbund aus Fluorpolymeren umfassend wenigstens ein textiles Gebilde und wenigstens eine darauf aufgebrachte Schicht, wobei das wenigstens eine textile Gebilde aus einer Mischung von wenigstens einem, in halogenfreien organischen Lösemitteln unlöslichen Perfluorpolymer und wenigstens einem, in halogenfreien organischen Lösemitteln löslichen, teilfluorierten Fluorpolymer und gegebenenfalls weiteren Polymeren aufgebaut ist, und, die wenigstens eine darauf aufgebrachte Schicht wenigstens ein in halogenfreien organischen Lösemitteln lösliches, teilfluoriertes Fluorpolymer enthält.

Überraschenderweise konnte im Rahmen der vorliegenden Erfindung herausgefunden werden, dass ein textiles Gebilde enthaltend oder bestehend aus einer Mischung von, in halogenfreien organischen Lösemitteln, unlöslichem Perfluorpolymer und wenigstens einem weiteren, in halogenfreien organischen Lösemitteln, löslichen, teilfluorierten Fluorpolymer mit einer oder mehr darauf aufgebrachten Schichten aus löslichem, teilfluorierten Fluorpolymer mit einer ausgezeichneten Haftung der einzelnen Schichten untereinander zu einem Verbund verarbeitet werden können. Zudem zeichnen sich die erfindungsgemäßen Verbunde durch eine hohe Flexibilität aus. Ein weiterer Vorteil der erfindungsgemäßen Verbunde liegt darin, dass diese einfach hergestellt werden können, indem das wenigstens eine textile Gebilde und die wenigstens eine darauf aufgebrachte Schicht miteinander thermisch, mittels Hochfrequenz oder durch Ultraschall verschweißt oder miteinander verklebt werden. Ferner zeichnen sich die erfindungsgemäßen Verbunde durch ein niedriges Flächengewicht aus. Aufgrund dessen sind diese vielfältig einsetzbar, u. a. als Membrankonstruktionen im Bauwesen, beim Fahrzeugbau, in der Luft- und Raumfahrt sowie in der Solartechnik.

Unter löslich bzw. unlöslich in halogenfreien organischen Lösemitteln wird im Sinne der vorliegenden Erfindung insbesondere verstanden, dass die entsprechenden Fluorpolymere in halogenfreien organischen Lösemitteln, insbesondere in Ketonen, wie Methylethylketon (MEK), bis zumindest einem Gehalt an Fluorpolymeren von 25 Gew.-% löslich bzw. unlöslich sind.

Erfindungsgemäß kann der Verbund ein oder mehr textile Gebilde und eine oder mehr darauf, beispielsweise in Form von Folien aufgebrachte Schichten umfassen oder daraus bestehen, wobei wenigstens eines der textilen Gebilde des Verbunds aus einer Mischung von wenigstens einem, in halogenfreien organischen Lösemitteln unlöslichen Perfluorpolymer und wenigstens einem löslichen, teilfluorierten Fluorpolymer und gegebenenfalls weiteren Polymeren aufgebaut ist und wenigstens eine der Schichten wenigstens ein lösliches, teilfluoriertes Fluorpolymer enthält. Besonders gute Ergebnisse werden erhalten, wenn die wenigstens eine Schicht aus wenigstens einem teilfluorierten Fluorpolymer besteht, und insbesondere, wenn die wenigstens eine Schicht aus genau einem teilfluorierten Fluorpolymer besteht.

Vorzugsweise besteht auch das wenigstens eine textile Gebilde des erfindungsgemäßen Verbundes aus einem, in halogenfreien organischen Lösemitteln unlöslichen Perfluorpolymer und einem löslichen, teilfluorierten Fluorpolymer, ohne dass dieses weitere Polymere enthält.

In Weiterbildung des Erfindungsgedankens wird vorgeschlagen, die wenigstens eine Schicht unmittelbar, d.h. insbesondere ohne weitere Zwischenschicht, auf dem wenigstens einen textilen Gebilde aufzubringen. Insbesondere hat es sich als vorteilhaft erwiesen, wenn der erfindungsgemäße Verbund aus einem oder mehr textilen Gebilden und aus einem oder mehr darauf aufgebrachten Schichten besteht, wobei die einzelnen textilen Gebilde jeweils aus den gleichen Polymermischungen und die einzelnen Schichten aus jeweils dem gleichen teilfluorierten Fluorpolymer bestehen.

Grundsätzlich kann das textile Gebilde des erfindungsgemäßen Verbundes alle dem Fachmann bekannten, in halogenfreien organischen Lösemitteln unlöslichen Perfluorpolymere enthalten, wobei besonders gute Ergebnisse erhalten werden, wenn das unlösliche Fluorpolymer aus der aus PTFE (Polytetrafluorethylen), Copolymeren aus Tetrafluorethylen und Perfluoralkoxyvinylether, FEP (Copolymeren aus Tetrafluorethylen und Hexafluorpropylen), und beliebigen Kombinationen von zwei oder mehr der vorgenannten Verbindungen bestehenden Gruppe ausgewählt ist. Beispiele für geeignete Copolymere aus Tetrafluorethylen und Perfluoralkoxyvinylether sind PFA (Copolymer aus Tetrafluorethylen und Perfluorpropylvinylether) und MFA (Copolymer aus Tetrafluorethylen und Perfluormethylvinylether).

Ein besonders guter Verbund zwischen dem wenigstens einen textilen Gewebe und der wenigstens einen darauf aufgebrachten Schicht wird erhalten, wenn das wenigstens eine in halogenfreien organischen Lösemitteln unlösliche Polymer des textilen Gebildes PTFE, PFA, MFA oder FEP ist.

Auch bezüglich der Form des textilen Gebildes, welches beispielsweise ein Gewirke, Gelege oder insbesondere ein Gewebe sein kann, ist die vorliegende Erfindung nicht limitiert. Vorzugsweise ist das textile Gebilde aus Fasern, Filamenten und/oder Bändchen aufgebaut. Dem Fachmann ist bekannt, dass sich Fasern, Filamente und Bändchen hinsichtlich Durchmesser und Geometrie voneinander unterscheiden. Unter Fasern im Sinne der vorliegenden Erfindung werden insbesondere Gebilde mit rundem Querschnitt verstanden, welche einen Durchmesser von weniger als 50µm aufweisen. Hingegen werden Gebilde mit rundem Querschnitt und einem Durchmesser von wenigstens 50µm, aber höchstens 1 mm gemäß der vorliegenden Erfindung als Filamente bezeichnet. Unter Bändchen im Sinne der vorliegenden Erfindung werden schließlich Gebilde mit rechteckigem Querschnitt verstanden, welche ein Verhältnis von Breite zu Dicke von größer als 1:1 aufweisen.

Gemäß einer weiteren bevorzugten Ausführungsform der vorliegenden Erfindung ist das wenigstens eine teilfluorierte Fluorpolymer des wenigstens einen textilen Gebildes und/oder das wenigstens eine teilfluorierte Fluorpolymer der wenigstens einen auf dem textilen Gebilde aufgebrachten Schicht Polyvinylidenfluorid (PVDF) oder ein vinylidenfluoridhaltiges Homo- oder Copolymer. Besonders gute Ergebnisse werden insbesondere erhalten, wenn das wenigstens eine teilfluorierte Fluorpolymer des wenigstens einen textilen Gebildes und/oder der wenigstens einen Schicht THV, also ein Terpolymer aus Tetrafluorethylen (TFE), Hexafluorpropylen (HFP) und Vinylidenfluorid (VDF), oder ein Copolymer aus VDF und TFE ist. Die vorgenannten Polymere schmelzen bei vergleichsweise niedrigen Temperaturen im Bereich von 120 bis 130°C und zeigen auf den erfindungsgemäß vorgesehenen textilen Geweben aus wenigstens zwei verschiedenen Fluorpolymeren eine ausgezeichnete Haftung und sind in Abmischung damit auch im Bereich zwischen 350 und 370°C thermisch belastbar. Bei THV bspw. handelt es sich um ein in gebräuchlichen, organischen Lösemitteln, insbesondere in MEK, sehr leicht lösliches Fluorpolymer, welches beispielsweise unter dem Handelsnamen Dyneon^{®} THV kommerziell erhältlich ist und im Bereich von 120 bis 180°C schmilzt.

Vorzugsweise ist die wenigstens eine Schicht des erfindungsgemäßen Verbundes eine Folie, welche auf jede dem Fachmann zu diesem Zweck bekannte Art und Weise mit dem textilen Gebilde verbunden werden kann. Gute Ergebnisse werden insbesondere erhalten, wenn die wenigstens eine Folie auf dem wenigstens einen textilen Gebilde auflaminiert ist. Alternativ zu Folien kann es sich bei der wenigstens einen Schicht auch um eine Beschichtung handeln.

In Weiterbildung des Erfindungsgedankens wird vorgeschlagen, auf der Oberfläche des Gebildes eine mikroporöse Schicht vorzusehen, welche schallabsorbierend ausgeführt ist.

Im Folgenden wird die Erfindung anhand von diese beschreibenden, diese aber nicht einschränkenden Beispielen erläutert:

### Beispiel 1

### (Lösungsversuche VDF-Copolymere)

### Polymer A:

Ein aus VDF - TFE aufgebautes Copolymer (Handelsname: Kynar SL; Hersteller: Archema (F)) mit einem Schmelzbereich von 120 - 130 °C wurde bei Raumtemperatur auf das Löseverhalten untersucht. Es konnten in Ketonen, wie Aceton, MEK, MIBK bis ca. 25 Gew.-% klare Lösungen erhalten werden.

### Polymer B:

Es wurden analog wie in Bezug auf Polymer A beschrieben Löseversuche mit einem TFE - HFP - VDF Copolymer (Handelsname: THV 220 A; Hersteller Dyneon (D)) durchgeführt. Es konnten, vergleichbar wie für Polymer A, bis 25 % Gew. mit den Lösemitteln Aceton, MEK, MIBK klare Lösungen hergestellt werden.

### Beispiel 2

### (PTFE-Polymer B-Mischung, Beschichten mit Fluorpolymer B)

Ein Misch-Monofilament (Durchmesser 0,09 mm/-rund) enthaltend 80 Gew.-% PTFE und 20 Gew.-% Polymer B wurde zu einem Gewebe in Leinwandbindung (L1/L1) verwebt. Das Flächengewicht betrug ca. 350 g/m². Im Anschluss daran wurde das Gewebe auf einer Beschichtungsanlage mit einer 25 Gew.-%-igen Lösung von Polymer B in MEK einseitig gestrichen und bei Temperaturen von 80 - 130° C getrocknet.

Bei einer Auftragsmenge von 35 g/m² wurde ein flexibler, fest haftender Verbund erhalten, der bis zu einer Wassersäule von 11 m Höhe dicht war. Eine rein mechanische Zerstörung des Verbundes war nicht möglich.

### Beispiel 3

### (Herstellung eines Mischverbundes aus PTFE und THV Monofilament)

### 3.1 Aufbau eines textilen Gebildes - Mischgewebe aus Monofilament

Ein Monofilamentgewebe in Leinwandbindung (L1/L1 - ISO 9354) wurde wie folgt hergestellt. Monofilamente: Jeweils 0,15 mm Durchmesser / runder Querschnitt. Kette / Schuss: Jeweils gesamte Fadenzahl 25 pro Zentimeter. Verhältnis PTFE zu THV/Aufbaufolge: Jeweils in Folge: 4 Monofilamente PTFE + 1 Monofilament THV

Es wurde ein gleichmäßig aufgebautes Monofilamentgewebe erhalten, welches nicht dimensionsstabil, -schiebefest war.

### 3.2 Weiterverarbeitung/Verfestigung über Lösemittel Schweißen

Ein nach 3.1 hergestelltes Gewebe wurde 10 Sekunden mit dem Lösemittel MEK behandelt und danach bei 50° C getrocknet.

Es wurde ein gut schiebefestes Gewebe erhalten, welches auf den Kreuzungspunkten der THV Monofilamente unter dem Mikroskop eine Verbindung zeigte.

### 3.3 Herstellung eines Gewebe-Folien-Verbundes

Ein nach 3.2 aufgebautes Gewebe wurde in einem DIN A4 Zuschnitt mit einer 25 µm dicken Folie aus dem Rohstoff THV 220 (Fa. Dyneon GmbH) belegt und in einer Laborpresse bei 150°C für 3 Minuten unter Anpressdruck zusammengefügt.

Nach dem Abkühlen auf Raumtemperatur wurde ein flexibler Verbund erhalten, der ohne Zerstörung der Gesamtstruktur nicht getrennt werden konnte.

## Patentansprüche

1. Verbund aus Fluorpolymeren umfassend wenigstens ein textiles Gebilde und wenigstens eine darauf aufgebrachte Schicht, wobei das wenigstens eine textile Gebilde aus einer Mischung von wenigstens einem, in halogenfreien organischen Lösemitteln unlöslichen Perfluorpolymer und wenigstens einem, in halogenfreien organischen Lösemitteln löslichen, teilfluorierten Fluorpolymer und ggf. weiteren Polymeren aufgebaut ist, und wobei die wenigstens eine darauf aufgebrachte Schicht wenigstens ein in halogenfreien organischen Lösemitteln lösliches, teilfluoriertes Fluorpolymer enthält.

2. Verbund nach Anspruch 1,
**dadurch gekennzeichnet, dass**
die wenigstens eine auf dem wenigstens einen textilen Gebilde aufgebrachte Schicht aus wenigstens einem teilfluorierten Fluorpolymer und bevorzugt aus einem teilfluorierten Fluorpolymer besteht.

3. Verbund nach Anspruch 1 oder 2,
**dadurch gekennzeichnet, dass**
die wenigstens eine Schicht unmittelbar, d.h. insbesondere ohne weitere Zwischenschicht, auf dem wenigstens einen textilen Gebilde aufgebracht ist.

4. Verbund nach einem der vorhergehenden Ansprüche,
**dadurch gekennzeichnet, dass**
das wenigstens eine in halogenfreien organischen Lösemitteln unlösliche Perfluorpolymer aus der aus Polytetrafluorethylen (PTFE); Copolymeren aus Tetrafluorethylen und Perfluoralkoxyvinylether, vorzugsweise Copolymeren aus Tetrafluorethylen und Perfluorpropylvinylether (PFA) und Copolymeren aus Tetrafluorethylen und Perfluormethylvinylether (MFA); Copolymeren aus Tetrafluorethylen und Hexafluorpropylen (FEP) und beliebigen Kombinationen von zwei oder mehr der vorgenannten Verbindungen bestehenden Gruppe ausgewählt ist.

5. Verbund nach einem der vorhergehenden Ansprüche,
**dadurch gekennzeichnet, dass**
das textile Gebilde aus Fasern, Filamenten und/oder Bändchen aufgebaut ist.

6. Verbund nach einem der vorhergehenden Ansprüche,
**dadurch gekennzeichnet, dass**
das wenigstens eine teilfluorierte Fluorpolymer des wenigstens einen textilen Gebildes und/oder das wenigstens eine teilfluorierte Fluorpolymer der wenigstens einen auf dem textilen Gebilde aufgebrachten Schicht Polyvinylidenfluorid (PVDF) oder ein vinylidenfluorid-(VDF-)haltiges Homo- oder Copolymer ist.

7. Verbund nach Anspruch 6,
**dadurch gekennzeichnet, dass**
das wenigstens eine teilfluorierte Fluorpolymer des wenigstens einen textilen Gebildes und/oder das wenigstens eine teilfluorierte Fluorpolymer der wenigstens einen auf dem textilen Gebilde aufgebrachten Schicht ein Terpolymer aus Tetrafluorethylen (TFE), Hexafluorpropylen (HFP) und Vinylidenfluorid (VDF) oder ein Copolymer aus TFE und VDF ist.

8. Verbund nach einem der vorhergehenden Ansprüche,
**dadurch gekennzeichnet, dass**
die wenigstens eine Schicht eine Folie ist, welche auf dem wenigstens einen textilen Gebilde vorzugsweise auflaminiert ist.

9. Verbund nach einem der vorhergehenden Ansprüche,
**dadurch gekennzeichnet, dass**
dieser durch eine mikroporöse Schicht auf der Oberfläche schallabsorbierend ausgeführt ist.

## Claims

1. A composite of fluoropolymers including at least one textile structure and at least one layer applied thereon, with the at least one textile structure being built up of a mixture of at least one perfluoropolymer insoluble in halogen-free organic solvents and at least one partly fluorated fluoropolymer soluble in halogen-free organic solvents and optionally further polymers and wherein the at least one layer applied thereon contains at least a partly fluorated fluoropolymer soluble in halogen-free organic solvents.

2. A composite in accordance with claim 1,
**characterized in that**
the at least one layer applied onto the at least one textile structure consists of at least one partly fluorated fluoropolymer and preferably of a partly fluorated fluoropolymer.

3. A composite in accordance with claim 1 or claim 2,
**characterized in that**
the at least one layer is directly applied, i.e. in particular without a further intermediate layer, onto the at least textile structure.

4. A composite in accordance with one of the preceding claims,
**characterized in that**
the at least one perfluoropolymer insoluble in halogen-free organic solvents is selected from the group consisting of polytetrafluoroethylene (PTFE); copolymers of tetrafluoroethylene and perfluoroalkoxyvinylether, preferably copolymers of tetrafluoroethylene and perfluoropropylvinylether (PFA) and copolymers of tetrafluoroethylene and perfluoromethylvinylether (MFA); copolymers of tetrafluoroethylene and hexafluoropropylene (FEP) and any desired combinations of two or more of the above named compounds.

5. A composite in accordance with one of the preceding claims,
**characterized in that**
the textile structure is built up of fibers, filaments and/or ribbons.

6. A composite in accordance with one of the preceding claims,
**characterized in that**
at least one partly fluorated fluoropolymer of the at least one textile structure and/or the at least one partly fluorated fluoropolymer of the at least one layer applied to the textile structure is polyvinylidenefluoride (PVDF) or a vinylidenefluoride (VDF)-containing homopolymer or copolymer.

7. A composite in accordance with claim 6,
**characterized in that**
at least one partly fluorated fluoropolymer of the at least one textile structure and/or the at least one partly fluorated fluoropolymer of the at least one layer applied to the textile structure is a terpolymer of tetrafluoroethylene (TFE), hexafluoropropylene (HFP) and vinylidenfluoride (VDF) or a copolymer of TFE and VDF.

8. A composite in accordance with one of the preceding claims,
**characterized in that**
the at least one layer is a foil which is preferably laminated on at least one textile structure.

9. A composite in accordance with one of the preceding claims,
**characterized in that**
it is made sound adsorbing by a microporous layer on the surface.

## Revendications

1. Article composite en fluoropolymères comprenant au moins une structure textile et au moins une couche appliquée sur celle-ci, ladite au moins une structure textile étant constituée d'un mélange d'au moins un perfluoropolymère insoluble dans des solvants organiques dépourvus d'halogènes, et d'au moins un fluoropolymère partiellement fluoré soluble dans des solvants organiques dépourvus d'halogène, et le cas échéant d'autres polymères, et dans lequel ladite au moins une couche appliquée contient au moins un fluoropolymère partiellement fluoré soluble dans des solvants organiques dépourvus d'halogène.

2. Article composite selon la revendication 1,
**caractérisé en ce que** ladite au moins une couche appliquée sur ladite au moins une structure textile est constituée par au moins un fluoropolymère partiellement fluoré et de préférence par exactement un fluoropolymère partiellement fluoré.

3. Article composite selon la revendication 1 ou 2,
**caractérisé en ce que** ladite au moins une couche est appliquée directement sur ladite au moins une structure textile, c'est-à-dire en particulier sans autre couche intermédiaire.

4. Article composite selon l'une des revendications précédentes,
**caractérisé en ce que** ledit au moins un perfluoropolymère insoluble dans des solvants organiques dépourvus d'halogène est choisi parmi le groupe comprenant : polytétrafluoroéthylène (PTFE) ; copolymère de tétrafluoroéthylène et de perfluoroalcoxyvinyléther, de préférence copolymère de tétrafluoroéthylène et de perfluoropropylvinyléther (PFA) et copolymère de tétrafluoroéthylène et perfluorométhylvinyléther (MFA) ; copolymère de tétrafluoroéthylène et hexafluoropropylène (FEP) et des combinaisons quelconques de deux ou plusieurs des composés précités.

5. Article composite selon l'une des revendications précédentes,
**caractérisé en ce que** la structure textile est constituée à partie de fibres, de filaments et/ou de bandelettes.

6. Article composite selon l'une des revendications précédentes,
**caractérisé en ce que** ledit au moins un fluoropolymère partiellement fluoré de ladite au moins une structure textile et/ou ledit au moins un fluoropolymère partiellement fluoré de ladite au moins une couche appliquée sur la structure textile est du fluorure de polyvinylidène (PVDF) ou un homopolymère ou un copolymère contenant du fluorure de vinylidène (VDF).

7. Article composite selon la revendication 6,
**caractérisé en ce que** ledit au moins un fluoropolymère partiellement fluoré de ladite au moins une structure textile et/ou ledit au moins un fluoropolymère partiellement fluoré de ladite au moins une couche appliquée sur la structure textile est un terpolymère de tétrafluoroéthylène (TFE), hexafluoropropylène (HFP) et fluorure de vinylidène (VDF) ou un copolymère de TFE et VDF.

8. Article composite selon l'une des revendications précédentes,
**caractérisé en ce que** ladite au moins une couche est un film qui est appliqué, de préférence par laminage, sur ladite au moins une structure textile.

9. Article composite selon l'une des revendications précédentes,
**caractérisé en ce que** celui-ci est réalisé de manière à absorber les sons grâce à une couche microporeuse sur la surface.
